# EUROPEAN PATENT APPLICATION

(11) **EP 3 451 478 A1**
(43) Date of publication of application: **06.03.2019**
(21) Application number: 18191305.4
(22) Date of filing: 28.08.2018
(51) Int. Cl.: H02J 1/10, H02J 7/00, H02J 7/35

(54) **SOLAR CHARGING SYSTEM AND CONTROL METHOD THEREOF**

(30) Priority: 01.09.2017 CN 201710780286
(71) Applicant: Beijing Hanergy Solar Power Investment Co., Ltd., 101499 Beijing (CN)
(72) Inventor: ZHANG, Zhifu, Beijing 101499 (CN)
(74) Representative: Casalonga

(57) **Abstract**

The present application provides a solar charging system and a control method thereof. The solar charging system (01) includes: a first battery pack (10,1), a photovoltaic power generation module (11,4), a second battery pack (12,6), a DC/DC converter (13,2) and a control component (14,3). The first battery pack (10,1) is electrically connected to the second battery pack (12,6) through the DC/DC converter (13,2). The second battery pack (12,6) is electrically connected to the photovoltaic power generation module (11,4). The control component (14,3) is configured to detect the voltage of the second battery pack (12,6), and control connection/disconnection between the DC/DC converter (13,2) and the second battery pack (12,6) according to the detected voltage.

## Description

### CROSS-REFERENCE TO RELATED APPLICATION

This application claims priority to Chinese Patent Application No. 201710780286.3, filed on September 01, 2017, titled "SOLAR AUXILIARY CHARGING SYSTEM AND CONTROL METHOD THEREOF", which is incorporated herein by reference in its entirety.

### TECHNICAL FIELD

The present disclosure relates to the technical field of photovoltaic, more particularly, to a solar charging system and a control method thereof.

### BACKGROUND

Solar power may be used as a main power or an auxiliary energy for some equipment. The solar radiation power on the ground will not exceed 1 kW/m². Calculated by the current photoelectric conversion efficiency, if the equipment (for example, a car) uses solar power as the main power completely, the sunlight energy needs to be received in an area of ranging from several square meters to dozens of square meters or even several hundred square meters; however, the effective area of the equipment is usually limited, thus it is obviously difficult to achieve the main power completely using solar power. Therefore, at present, using solar power combined with batteries as an auxiliary energy is one of application modes commonly used.

The voltage of a power battery is generally high, reaching several hundred volts, and when the solar module is used in a limited space, the power of the solar module is limited and its voltage is generally dozens of volts; If the electricity generated by the solar module is directly boosted and supplied to the battery for charging, the electric energy loss during the boosting process is large, thereby leading to a low utilization ratio of solar power. Therefore, currently, electricity generated by the solar module, when used on a limited area, is often used to power, for example, low-voltage auxiliary batteries and/or low-voltage electric apparatuses.

### SUMMARY

The present disclosure provides a solar charging system, comprising: a first battery pack, a photovoltaic power generation module, a second battery pack, a DC/DC converter, a control component, wherein the first battery pack is electrically connected to the second battery pack through the DC/DC converter, the second battery pack is electrically connected to the photovoltaic power generation module, the control component is configured to detect a voltage of the second battery pack, and control connection/disconnection between the DC/DC converter and the second battery pack according to the detected voltage of the second battery pack.

Optionally, the control component includes: a switch, a detector and a controller, wherein, the switch is configured to control connection/disconnection between the DC/DC converter and the second battery pack; the detector is electrically connected to the second battery pack, and is configured to detect the voltage of the second battery pack; the controller is configured to control connection/disconnection between the switch and the DC/DC converter according to the voltage detected by the detector.

Optionally, the switch is connected in series between the DC/DC converter and the second battery pack.

Optionally, the detector is communicatively connected to the controller.

Optionally, the switch is a relay, and an output end of the DC/DC converter is electrically connected to the second battery pack through the relay.

Optionally, the output end of the DC/DC converter is electrically connected to a COM port of the relay, and an electrode corresponding to the second battery pack is electrically connected to a normally open contact of the relay.

Optionally, the relay is an over-voltage and under-voltage relay; a set over-voltage value of the over-voltage and under-voltage relay is lower than the voltage of the second battery pack in a full state.

Optionally, the charging system further includes: a low voltage load; an electrode of at least one of the first battery pack, the second battery pack and the photovoltaic power generation module is electrically connected to an electrode corresponding to the low voltage load.

Optionally, the charging system further comprises: a timing device; the controller controls the timing device; when the voltage of the second battery pack is lower than a lower limit of the voltage threshold range, the controller controls the timing device to start timing, and after a predetermined time, the timing device sends a signal that the timing is over to the controller.

Optionally, an output end of the timing device is communicatively connected to the controller.

Optionally, the charging system further includes a display device, and the controller is further configured to control the display device to display the voltage of the second battery pack.

Optionally, an input end of the display device is communicatively connected to a display port of the controller.

Optionally, one of the batteries of the second battery pack or series batteries composed of several batteries supply power to the detector and the controller; and/or, one of the batteries of the second battery pack or series batteries composed of several batteries supply power to the controller.

Optionally, the solar charging system further includes a photovoltaic charging controller, and the photovoltaic power generation module is electrically connected to the second battery pack through the photovoltaic charging controller.

Optionally, at least one electrode of the photovoltaic power generation module is electrically connected to the second battery pack through a diode; when an output voltage of the photovoltaic power generation module is higher than the voltage of the second battery pack, the diode is turned on.

The present disclosure further provides a control method of the above solar charging system, comprising the following steps:

setting a predetermined voltage threshold range; controlling the photovoltaic power generation module to charge the second battery pack, or controlling the first battery pack and the photovoltaic power generation module to charge the second battery pack, according to a comparative result between the voltage of the second battery pack and the voltage threshold range.

Optionally, the upper limit of the voltage threshold range is lower than the voltage of the second battery pack when the second battery pack is fully charged, and the lower limit of the voltage threshold range is higher than the voltage when the second battery pack is exhausted; and the step of controlling the photovoltaic power generation module to charge the second battery pack, or controlling the first battery pack and the photovoltaic power generation module to charge the second battery pack includes:

detecting the voltage of the second battery pack during the voltage rise, and comparing the detected voltage with the voltage threshold range;

controlling the photovoltaic power generation module to charge the second battery pack when the detected voltage is higher than the upper limit of the voltage threshold range;

controlling the photovoltaic power generation module and the first battery pack to charge the second battery pack when the detected voltage is lower than or equal to the lower limit of the voltage threshold range.

Optionally, the upper limit of the voltage threshold range is lower than the voltage of the second battery pack when the second battery pack is fully charged, and the lower limit of the voltage threshold range is higher than the voltage when the second battery pack is exhausted; and the step of controlling the photovoltaic power generation module to charge the second battery pack or controlling the first battery pack and the photovoltaic power generation module to charge the second battery pack includes:

detecting the voltage of the second battery pack during the voltage drop, and comparing the detected voltage with the voltage threshold range;

controlling the photovoltaic power generation module to charge the second battery pack when the detected voltage is higher than the lower limit of the voltage threshold range; and

controlling the photovoltaic power generation module and the first battery pack to charge the second battery pack when the detected voltage is lower than or equal to the lower limit of the voltage threshold range.

### BRIEF DESCRIPTION OF THE DRAWINGS

In order to describe technical solutions in embodiments of the present disclosure or in the prior art more clearly, the accompanying drawings to be used in the description of embodiments or the prior art will be introduced briefly. Obviously, the accompanying drawings to be described below are merely some embodiments of the present disclosure, and a person of ordinary skill in the art can obtain other drawings according to those drawings without paying any creative effort.

The accompanying drawings are used to provide further understanding of the disclosure and constitute a part of the description. The accompanying drawings together with the following embodiments serve to explain the disclosure, but do not constitute a limitation to the disclosure. In the accompanying drawings:

Fig. 1 is a configuration diagram of a charging system provided by some embodiments of the present disclosure;

Fig. 2 is a schematic diagram of the circuit arrangement of a charging system according to some embodiments of the present disclosure;

Fig. 3 is a schematic diagram of the circuit arrangement of another charging system according to some embodiments of the present disclosure;

Fig. 4 is a schematic diagram of the circuit arrangement of yet another charging system according to some embodiments of the present disclosure;

Fig. 5 is a schematic diagram of the circuit arrangement of still another charging system according to some embodiments of the present disclosure;

Fig. 6 is a schematic diagram of the partial circuit arrangement of a charging system according to some embodiments of the present disclosure;

Fig. 7 is a schematic flow diagram of a control method of a charging system according to some embodiments of the present disclosure.

### DETAILED DESCRIPTION

The technical solutions in the embodiments of the present disclosure will be described clearly and completely with reference to the accompanying drawings in the embodiments of the present disclosure. Obviously, the described embodiments are merely some but not all of embodiments of the present disclosure. All other embodiments made on the basis of the embodiments of the present disclosure by a person of ordinary skill in the art without paying any creative effort shall be included in the protection scope of the present disclosure.

The embodiments of the disclosure will be described below in detail with reference to the accompanying drawings. It should be understood that embodiments described herein are only for illustration and explanation of the disclosure, but not for limitation to the disclosure.

In a related art, since a conventional low-voltage auxiliary battery is directly connected to a high-voltage power battery through a DC/DC converter (Direct Current/ Direct Current, indicates converting a DC voltage to another DC voltage), and there is no electrical control element between the low-voltage auxiliary battery and the high-voltage power battery. As long as the DC/DC converter is started, it will always work. Therefore, when there is illumination and after the DC/DC converter is started, the high-voltage power battery and the solar module will simultaneously charge the low-voltage auxiliary battery, and the power provided by the high-voltage power battery competes with the power provided by the solar module. Due to the high charging capacity of the high-voltage power battery, the low-voltage auxiliary battery can reach a saturated state of power in a short time. After the solar module supplies a small amount of energy to the low-voltage auxiliary battery, the low-voltage auxiliary battery will turn into to a state of Float Charge. The utilization ratio of solar power is very low, thereby wasting a lot of electric energy generated by solar power. For example, there exists the above problem when the solar module is applied to electric vehicles.

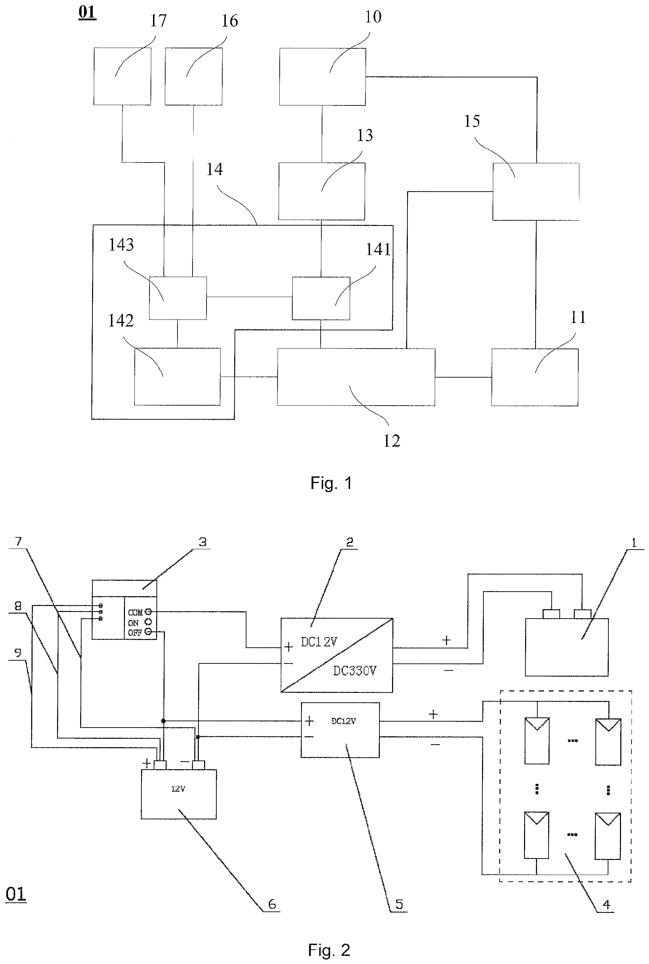

As illustrated in Fig. 1, some embodiments of the present disclosure provide a charging system (may also be referred to as a solar auxiliary charging system) 01, including: a first battery pack (may also be referred to as a main power battery pack) 10, a photovoltaic power generation module (may also be referred to as a solar module, or a solar power generation module or a solar photovoltaic module) 11, a second battery pack (may also be referred to as an auxiliary battery pack) 12, a DC/DC converter 13, and a control component 14; wherein, the first battery pack 10 is electrically connected to the second battery pack 12 through the DC/DC converter 13, the second battery pack 12 is electrically connected to the photovoltaic power generation module 11, and the control component 14 is configured to detect the voltage of the second battery pack 12, and control connection/disconnection between the DC/DC converter 13 and the second battery pack 12 according to the detected voltage.

In this way, in a charging system 01 provided by some embodiments of the present disclosure, the photovoltaic power generation module 11 always charges the second battery pack 12, that is, the state in which the photovoltaic power generation module 11 charges the second battery pack 12 is always maintained, so that the electric energy converted by the photovoltaic power generation module 11 may be fully utilized, and the utilization ratio of solar power is improved; and the first battery pack 10 is controlled to charge or not to charge the second battery pack 12 according to the voltage of the second battery pack 12, to ensure that the second battery pack 12 is not exhausted.

For example, as illustrated in Fig. 1, the control component 14 includes a switch 141, a detector 142 and a controller 143, wherein: the switch 141 is configured to control connection/disconnection between the DC/DC converter 13 and the second battery pack 12, the detector 142 is electrically connected to the second battery pack 12, the detector 142 is configured to detect the voltage of the second battery pack 12, and the controller 143 is configured to control connection/disconnection of the switch 141 according to the voltage detected by the detector 142.

For example, the switch 141 is connected in series between the DC/DC converter 13 and the second battery pack 12.

For example, the detector 142 is communicatively connected to the controller 143 to receive the voltage of the second battery pack 12 detected by the detector 142.

For example, the switch 141 is a relay, and an output end of the DC/DC converter 13 is electrically connected to the second battery pack 12 through the relay.

The relay is an over-voltage and under-voltage relay, and the over-voltage setting value of the over-voltage and under-voltage relay is lower than the voltage of the second battery pack 12 in a full state.

For example, as illustrated in Fig. 1, the charging system 01 further includes: a low voltage load 15; an electrode of at least one of the first battery pack 10, the second battery pack 12 and the photovoltaic power generation module 11 is electrically connected to an electrode corresponding to the low voltage load 15.

For example, as illustrated in Fig. 1, the charging system 01 further comprises:
a timing device 16. The controller 143 controls the timing device 16. When the voltage of the second battery pack 12 is lower than the lower limit of a voltage threshold range, the controller 143 controls the timing device 16 to start timing, and
after a predetermined time, the timing device 16 sends a signal that the timing is over to the controller 143.

An output end of the timing device 16 is communicatively connected to the controller 143.

For example, as illustrated in Fig. 1, the charging system 01 further includes a display device 17, and the controller 143 is further configured to control the display device 17 to display the voltage of the second battery pack 12.

An input end of the display device 17 is communicatively connected to a display port of the controller 143.

As illustrated in Fig. 2, some embodiments of the present disclosure provide a charging system (may also be referred to as a solar auxiliary charging system) 01, including:

a photovoltaic power generation module (may also be referred to as a solar module) 4, which is one of the power sources of the second battery pack (may also be referred to as an auxiliary battery pack or a low voltage auxiliary battery) 6;

a photovoltaic charging controller (may also be referred to as a solar charging controller) 5, which is configured to control the voltage and current of electric energy generated by the photovoltaic power generation module 4, so that the output matches the charging voltage of the second battery pack 6. Besides, the photovoltaic charging controller 5 is also configured to provide a suitable current to the second battery pack 6 and the low voltage load according to the demand ability of the second battery pack 6 and the low voltage load; the photovoltaic charging controller 5 also has functions of over-voltage, over-current and short-circuit protection;

a detector (also referred to as a voltage detector), which is configured to measure the voltage of the second battery pack 6;

a controller, which can achieve functions of over-limit protection of over-voltage and under-voltage and circuit switching.

The photovoltaic power generation module 4 is connected to the second battery pack 6 through the photovoltaic charging controller 5 to charge the second battery pack 6, supplying power to the low voltage load through the photovoltaic charging controller 5 (the low voltage load is not illustrated in Fig. 2, and please refer to Fig. 1 above);

The control component (may also be referred to as a voltage detection controller module) includes a digital DC voltmeter 3.The positive electrode 8 of the power supply and the positive electrode 9 of the measuring end of the digital DC voltmeter 3 are connected to the positive electrode of the second battery pack 6 (illustrated by the symbol "+" in Fig. 2), and the common negative electrode 7 of the power source is connected to the negative electrode of the second battery pack 6 (illustrated by the symbol "-" in Fig. 2).

As illustrated in Fig. 2, in some embodiments of the present disclosure, it is taken as an example that a detector, a controller and a switch (for example, an over-voltage and under-voltage relay) are integrated in the digital DC voltmeter 3; wherein, a pair of normally open contacts of the over-voltage and under-voltage relay are connected in series between the positive electrode (illustrated by the symbol "+" in Fig. 2) of the low voltage end of the DC/DC converter (for example, the vehicle-mounted DC/DC converter) 2 and the positive electrode of the second battery pack 6. The pair of normally open contacts includes a normally open contact (illustrated by the symbol "OFF" in Fig. 2) and a common contact port i.e. COM port (illustrated by the symbol "COM" in Fig. 2). The real-time monitoring and control to the voltage of the second battery pack 6 is achieved by setting the upper and lower limits of the voltage threshold range of the controller.

Thus, the circuit switching may be performed by the digital DC voltmeter 3. The method of the circuit switching performed using a digital DC voltmeter 3 integrated with a detector, a controller and an over-voltage and under-voltage relay is not unique, and each component may be separately installed. For example, a single-chip microcomputer or a Central Processing Unit (CPU) is used as a controller to control the relay (or the over-voltage and under-voltage relay) to perform the circuit switching. In some embodiments of the present disclosure, the common negative electrode 7 of the digital DC voltmeter 3 is connected to the negative electrode of the second battery pack 6, and the positive electrode 8 of the power source and the positive electrode of the measuring end (also referred to as a detection positive electrode) 9 of the digital DC voltmeter 3 are connected to the positive electrode of the second battery pack 6.

As illustrated in Fig. 2, the first battery pack (also referred to as a power battery) 1 is DC 330V (direct-current 330V). The nominal voltage of the second battery pack 6 (also referred to as a low voltage auxiliary battery) is 12V, and the voltage after full charged is higher than 13V. The upper limit of the voltage threshold range detected by the digital DC voltmeter 3 is set to 13V, and the lower limit is 12V. The detector detects the voltage of the second battery pack 6 in real time and sends the detected voltage to the controller.

When the illumination is too weak for a long-time or the power consumption of the low voltage load is too large and the controller receives the signal that the voltage of the second battery pack 6 is lowered to the set lower limit value 12V, the controller controls the relay coil to be powered, and the normally open contact is turned on, thus the first battery pack 1 is added to supply power to the second battery pack 6 and the low voltage load through the DC/DC converter 2; when the controller receives the signal that the second battery pack 6 is charged to be higher than the set upper limit value 13V, the controller controls the relay coil to lose power, and the normally open contact is turned on, and the circuit via which the first battery pack 1 charges the second battery pack 6 through the DC/DC converter 2 is disconnected.

When illumination is sufficient or the power consumption of the low voltage load is too small, since the second battery pack 6 has a certain electromotive force, the potential difference between the photovoltaic power generation module 4 and the low voltage load is greater than the potential difference between the photovoltaic power generation module 4 and the second battery pack 6, the photovoltaic power generation module 4 preferably supplies power to the low voltage load, and then charges the second battery pack 6. In this way, after the second battery pack 6 is fully charged, the second battery pack 6 enters a state of Float Charge, and the photovoltaic power generation module 4 only provides trickle to charge, that is, trickle charge, to the second battery pack 6, thereby avoiding the loss of life expectancy of the second battery pack 6 due to long-term self-consumption of power.

Here, since the normally closed contact (illustrated by the symbol "ON" in Fig. 2) is not connected to the power supply circuit between the photovoltaic power generation module 4 and the second battery pack 6. Therefore, in the whole working process of the above charging system, as long as the corresponding illumination condition is reached, the photovoltaic power generation module 4 will remain in a power generating state, charging the second battery pack 6 and supplying power to the low voltage load, and the priority level of charging is higher than the output of the first battery pack 1 through the DC/DC converter 2.

When the voltage of the second battery pack 6 is lower than 12V, the controller controls the relay to be turned off, and the first battery pack 1 charges the second battery pack 6. When the voltage of the second battery pack 6 exceeds 13V, the controller controls the relay to be turned on, stopping charging of the second battery pack 6. The photovoltaic power generation module 4 is always electrically connected to the second battery pack 6, that is, the photovoltaic power generation module 4 always maintains charging of the second battery pack 6.

An optional manner is that the predetermined voltage for charging the first battery pack is lower than the voltage of the second battery pack 6 when the second battery pack 6 is fully charged (for example, the nominal voltage of the second battery pack 6 in some embodiments of the present disclosure is 12V, and the voltage in a fully charged state is 13.6 V). In this way, even if the first battery pack 1 finishes charging the second battery pack 6, the above setting manner can enable the photovoltaic power generation module 4 to provide trickle to charge for the second battery pack 6, making the second battery pack 6 remain in a state of Float Charge, facilitating to prolong the service life of the second battery pack 6.

In addition, when the above setting manner is used, the second battery pack 6 may still utilize the electric energy converted by the photovoltaic power generation module 4 after the first battery pack 1 finishes charging the second battery pack 6, thereby improving the utilization ratio of the photovoltaic power generation module 4.

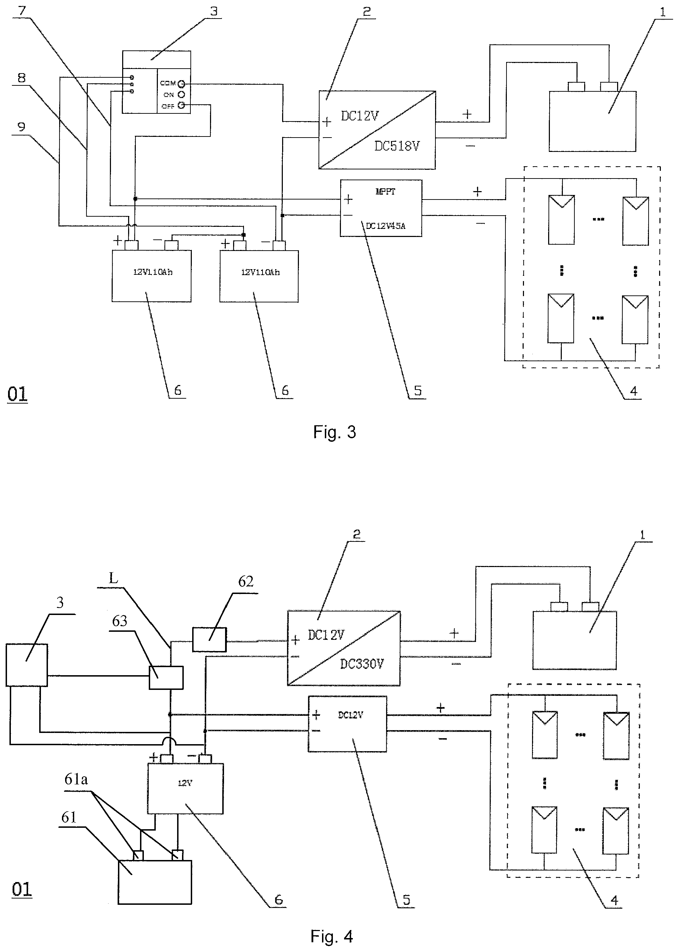

As illustrated in Fig. 3, some embodiments of the present disclosure provide a charging system (also referred to as an auxiliary charging system) 01, wherein the first battery pack (also referred to as a power battery) 1 is DC 518V, and the second battery pack 6 is a battery composed of two batteries with a nominal voltage of 12V, the voltage of each battery after full charge being higher than 13V. The upper limit of the voltage threshold range detected by the controller is set to 26V and the lower limit is 24V. The detector detects the voltage of the second battery pack 6 in real time and sends the detected voltage to the controller. When the illumination is too weak for a long-time or the power consumption of the low voltage load is too large and the controller receives the signal that the voltage of the second battery pack is lowered to the set lower limit value 12V, the controller controls the relay coil to be powered, and the normally open contact (illustrated by the symbol "OFF" in Fig. 3) is turned on, thus the first battery pack 1 is added to charge the second battery pack 6 and supply power to the low voltage load (the low voltage load is not illustrated in Fig. 3, and please refer to Fig. 1 above) through the DC/DC converter 2. when the controller receives the signal that the second battery pack 6 is charged to be higher than the set upper limit value 13V, the controller controls the relay coil to lose power, and the normally open contact is turned on, and the circuit via which the first battery pack 1 charges the second battery pack 6 through the DC/DC converter 2 is disconnected;

When illumination is sufficient or the power consumption of the low voltage load is too small, since the second battery pack 6 has a certain electromotive force, the potential difference between the photovoltaic power generation module 4 and the low voltage load is greater than the potential difference between the photovoltaic power generation module 4 and the second battery pack 6, the photovoltaic power generation module 4 preferably supplies power to the low voltage load, and then charges the second battery pack 6. After the second battery pack 6 is fully charged, the second battery pack 6 enters a state of Float Charge, and the photovoltaic power generation module 4 only provides trickle to charge the low voltage battery, thereby avoiding the loss of life expectancy of the second battery pack 6 due to long-term self-consumption of power.

Here, since the normally closed contact (illustrated by the symbol "ON" in Fig. 2) is not connected to the power supply circuit between the photovoltaic power generation module 4 and the second battery pack 6. Therefore, in the whole working process of the above charging system, as long as the corresponding illumination condition is reached, the photovoltaic power generation module 4 will remain in a power generating state, charging the second battery pack 6 and supplying power to the low voltage load, and the priority level of charging is higher than the output of the first battery pack 1 through the DC/DC converter 2.

In some embodiments of the present disclosure, the detector, the controller and the over-voltage and under-voltage relay are integrated in the digital DC voltmeter 3, wherein, the common negative electrode 7 of the digital DC voltmeter is electrically connected to the negative electrode (illustrated by the symbol "-" in Fig. 3) of the second battery pack, and the positive electrode 8 of the power source of the digital DC voltmeter 3 is electrically connected to the positive electrode 7 (illustrated by the symbol "+" in Fig. 3) of one of the second battery packs 6 connected to the common negative electrode 7. Besides, the detection positive electrode 9 of the digital DC voltmeter 3 is electrically connected to the positive electrode of each of the second battery packs 6.

"MPPT" in Fig. 3 is a type of photovoltaic charging controller 5, which refers to Maximum Power Point Tracking, that is, a "MPPT" solar controller. As illustrated in Fig. 4, the embodiment provides a charging system (also referred to as a solar auxiliary charging system) 01, including a photovoltaic power generation module 4, which generates electric energy under illumination conditions. The electric energy generated by the photovoltaic power generation module 4 charges the second battery pack 6 and supplies power to the low voltage load 61 through the control and conversion of the photovoltaic charging controller 5.

The power interface 61a of the low voltage load 61 is electrically connected to the second battery pack 6, so that the second battery pack 6 is connected in series with the low voltage load 61 when the second battery pack 6 supplies power to the low voltage load 61, and the low voltage load 61 is connected in parallel with the second battery pack 6 when the photovoltaic power generation module 4 or the first battery pack 1 charges the second battery pack 6.In this way, the photovoltaic power generation module 4 or the first battery pack 1 directly supply power to the low voltage load 61, thereby reducing the number of power conversion and power loss.

The first battery pack 1 is electrically connected to the two electrodes (respectively illustrated by the symbols "+" and "-" in Fig. 4) of the input end of the DC/DC converter 2, and the two electrodes (respectively illustrated by the symbols "+" and "-" in Fig. 4) of the output end of the DC/DC converter 2 are electrically connected to the second battery pack 6. One of the wires (marked L in Fig. 4), for connecting the output end of the DC/DC converter 2 and the second battery pack 6, is connected in series with a manual switch 62 and a relay 63.

The second battery pack 6 is electrically connected to the DC digital display voltmeter 3. The DC digital display voltmeter 3 includes a detector, a controller and a display device (also referred to as a display screen or a display module). The detector is configured to detect the voltage of the second battery pack 6, and the controller receives the voltage information of the second battery pack 6 detected by the detector. The controller controls connection/disconnection of the relay 63 according to the voltage information of the second battery pack 6. When the relay is turned on and the manual switch 62 is turned off, the first battery pack 1 charges the second battery pack 6 through the DC/DC converter 2. When the relay 63 is turned off, and/or, the manual switch 62 is turned off, the photovoltaic power generation module 4 supplies power to the second battery pack 6 through the photovoltaic charging controller 5.

The display module is configured to display the voltage value so as to manually operate the manual switch 62 by observing the value displayed by the DC digital voltmeter 3. Through connection and disconnection of the manual switch 62, the first battery pack 1 is controlled to charge the second battery pack 6, and/or, the photovoltaic power generation module 4 is controlled to charge the second battery pack 6.

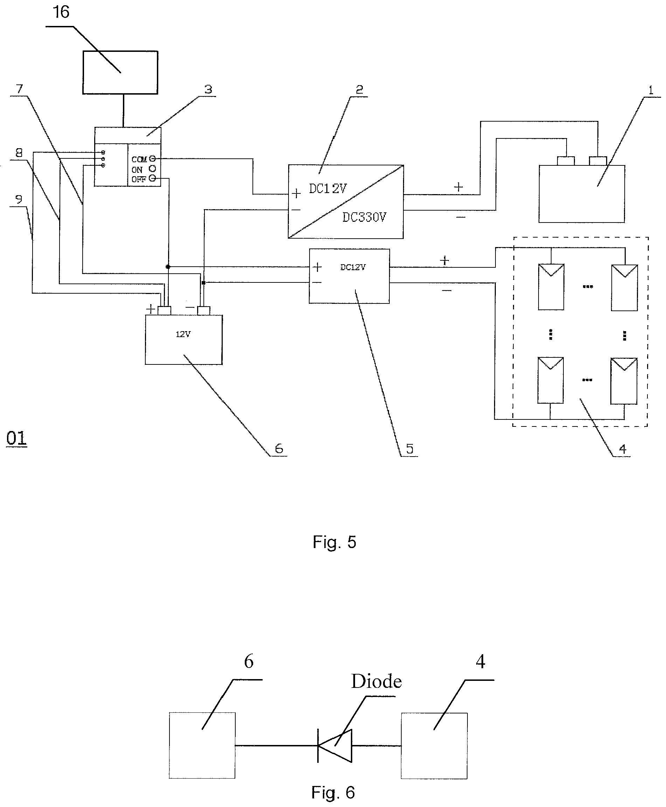

As illustrated in Fig. 5, some embodiments of the present disclosure provide a charging system, further including a timing device 16. The control component (the detector, the controller and the switch are integrated in the digital DC voltmeter 3) controls the timing device 16, and the timing device 16 is communicatively connected to the control component. When the voltage of the second battery pack 6 is lower than the predetermined voltage value (for example, 12V), the timing device 16 is triggered by the controller to start timing. When the timing is over, the DC digital voltmeter 3 measures the voltage of the second battery pack 6 once again. If the voltage of the second battery pack 6 is still lower than the predetermined voltage value, the controller will control the relay to be turned off so that the first battery pack 1 charges the second battery pack 6.

In this way, when the voltage of the second battery pack 6 is lower than the predetermined voltage, if the sunlight is sufficient, the electric energy converted by the photovoltaic power generation module 4 may be fully utilized. However, if the illumination is insufficient or the energy converted by the photovoltaic power generation module 4 is insufficient, and the voltage of the second battery pack 6 is still not charged to the predetermined voltage after a certain period of time, it is necessary to use the first battery pack 1 to charge the second battery pack 6.

In the above embodiments, the used nominal voltage of the first battery pack 1 is exemplified 330V. However, the voltage of the first battery pack described above is not limited thereto, but merely serves as an example. The nominal voltage of the first battery pack 1 may also be various voltage values such as 144V, 220V, 480V, 550V, etc.

Similarly, in the above embodiments, the used nominal voltage of the second battery pack 6 is exemplified 12V. However, the voltage of the auxiliary battery pack described above is not limited thereto, but merely serves as an example. The nominal voltage of the battery pack 6 may also be various voltage values such as 24V, 36V, etc.

In the charging system 01 illustrated in Fig. 2, since the second battery pack 6 has only one battery of 12V voltage, the common negative electrode 9 of the digital DC voltmeter 3 is connected to the negative electrode of the second battery pack 6, and the positive electrode 8 of the power source and the detection positive electrode 9 of the digital DC voltmeter 3 are connected to the positive electrode of the second battery pack 6.

This connection method does not limit the power supply mode of the digital DC voltmeter 3, for example, as illustrated in Fig. 3, when two 12V-voltage batteries connected in series are used as the second battery pack 6, the common negative electrode 9 and the positive electrode 8 of the power supply of the digital DC voltmeter 3 can respectively be connected to the positive electrode and the negative electrode of the second battery pack 6, and the detection positive electrode 9 is connected to the positive electrode of one battery in the battery pack.

Optionally, when a plurality of batteries connected in series are used as the second battery pack, one or several of the plurality of batteries may be used as a power source for the digital DC voltmeter, and the detection positive electrode is electrically connected to the positive electrode of one battery in the battery pack.

In the absence of illumination, due to the certain conductive property of the photovoltaic module, the photovoltaic module may become the load of the auxiliary battery pack or the main power battery pack. In order to prevent the photovoltaic power generation module from being damaged as a load, as illustrated in Fig. 6, at least one of the electrodes 4a of the photovoltaic power generation module 4 is electrically connected to the second battery pack 6 through a diode (marked "Diode" in Fig. 6). When the output voltage of the photovoltaic power generation module 4 is higher than the voltage of the second battery pack 6, the diode is turned on.

When the diode in the circuit is designed, since the diode is a unipolar conductive component, the diode is turned on in the direction that the photovoltaic power generation module outputs electric energy, thereby forming protection for the photovoltaic module, and also avoiding a waste of energy of the main power battery pack.

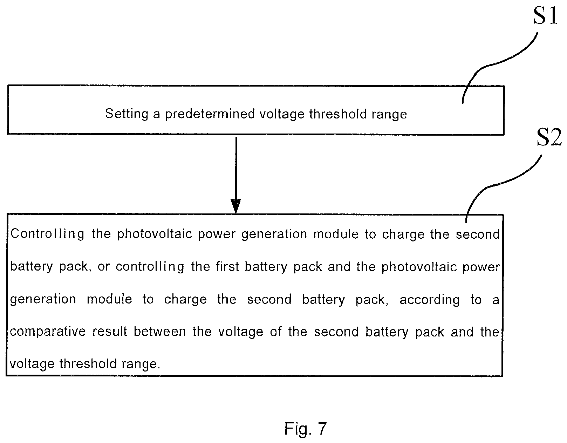

As illustrated in Fig. 7, some embodiments of the present disclosure provide a charging control method for a solar charging system (also referred to as a solar auxiliary battery pack or a solar auxiliary charging system), including the following steps:

S1, setting a predetermined voltage threshold range;

S2, controlling the photovoltaic power generation module to charge the second battery pack, or, controlling the first battery pack and the photovoltaic power generation module to charge the second battery pack, according to a comparative result between the voltage of the second battery pack and the voltage threshold range.

In this way, in a charging system provided by some embodiments of the present disclosure, the photovoltaic power generation module always charges the second battery pack, that is, the state in which the photovoltaic power generation module 11 charges the second battery pack 12 is always maintained, so that the electric energy converted by the photovoltaic power generation module 11 may be fully utilized, and the utilization ratio of solar power can be improved; And, according to a comparative result between the voltage of the second battery pack and the voltage threshold range, the first battery pack 10 is also controlled to charge or not to charge the second battery pack 12, to ensure that the second battery pack 12 is not exhausted.

Here, the upper limit of the voltage threshold range is lower than the voltage when the second battery pack is fully charged, and the lower limit of the voltage threshold range is higher than the voltage when the second battery pack is exhausted.

That is, when the voltage of the second battery pack is detected to be lower than the lower limit of the set voltage threshold range, the photovoltaic power generation module and the first battery pack simultaneously charge the second battery pack; when the voltage of the second battery pack is charged to be higher than the upper limit of the voltage threshold range, the first battery pack is controlled to stop charging the second battery pack, and only the photovoltaic power generation module continues to charge the second battery pack. In the whole charging process, the photovoltaic power generation module always charges the second battery pack to ensure a high utilization ratio of electricity generated by solar energy. Only the first battery pack is actually controlled, and only when the voltage of the second battery pack is detected to be lower than the lower limit of the voltage threshold range, the first battery pack is turned on and charges the second battery pack (a voltage of the second battery pack within the voltage threshold range does not activate the first battery pack to charge). When the voltage of the second battery pack reaches the upper limit of the voltage threshold range, the first battery pack stops charging the second battery pack.

For example, S2 includes:

during the voltage of the second battery pack rise, detecting the voltage of the second battery pack and comparing the voltage with the voltage threshold range;

controlling the photovoltaic power generation module to charge the second battery pack when the voltage is higher than the upper limit of the voltage threshold range;

controlling the photovoltaic power generation module and the first battery pack to charge the second battery pack when the voltage is lower than or equal to the lower limit of the voltage threshold range;

And/or optionally,

S2 includes:

during the voltage drop, detecting the voltage of the second battery pack and comparing the voltage with the voltage threshold range;

controlling the photovoltaic power generation module to charge the second battery pack when the voltage is higher than the lower limit of the voltage threshold range;

controlling the photovoltaic power generation module and the first battery pack to charge the second battery pack when the voltage is lower than or equal to the lower limit of the voltage threshold range.

The specific steps of the above method are as follows:

First, a threshold is determined, which is used as a preset voltage threshold.

In some embodiments of the present disclosure, a situation is used to make the upper and lower limits of the voltage threshold range coincident.

For example, for the second battery pack (also referred to as the auxiliary battery or the auxiliary battery pack) with a nominal voltage of 12V, the voltage after full charge is about 13.6V. For example, 12V can be selected as the voltage threshold (the upper and lower limits of the voltage threshold range are both 12V).

During the use of the auxiliary battery, when the voltage is lower than 12V, the charging power supply of the auxiliary battery is switched to the mode of simultaneous charging of the main power battery pack and the photovoltaic power generation module, and using the main power battery pack can quickly charge the auxiliary battery. When the voltage of the auxiliary battery is charged to 12V or more, the electrical connection between the main power battery pack and the auxiliary battery pack is disconnected, and only the photovoltaic power generation module is used to continue charging the auxiliary battery pack.

This charging mode ensures that the photovoltaic power generation module may always charge the auxiliary battery pack. Moreover, when the auxiliary battery pack is about to be fully charged, charging the auxiliary battery pack with the photovoltaic power generation module may also maintain the auxiliary battery pack in a state of Float Charge.

Through the above switching method, not only the electric energy converted by the photovoltaic power generation module may be fully utilized, but also the state of Float Charge of the auxiliary battery pack may be maintained for a long-term, and the service life of the auxiliary battery pack may be prolonged.

Or optionally, in some embodiments of the present disclosure, another situation in which the voltage threshold range is 11V -13V is used. That is, the upper limit is 13V and the lower limit is 11V. The upper limit value is not the same as the lower limit value.

When the voltage of the auxiliary battery pack is detected to be lower than 11V, control the main power battery pack and the photovoltaic power generation module to simultaneously charge the auxiliary battery pack. Since the voltage of the main power battery pack is high and the power capacity is large, the auxiliary battery pack may be charged in a short time. When the voltage of the auxiliary battery pack is charged to 13V, the circuit via which the main power battery pack charges the auxiliary battery pack is disconnected, and only the photovoltaic power generation module is used to charge the auxiliary battery pack.

In some embodiments of the present disclosure, when the voltage of the auxiliary battery pack is higher than 13V, the photovoltaic power generation module charges the auxiliary battery pack, and when the power consumption of the auxiliary battery pack is large, the voltage of the auxiliary battery pack gradually decreases; when the voltage drops below 13V and above 11V, the current charging mode remains unchanged, and only the photovoltaic power generation module is used for charging; when the voltage drops below 11V, the main power battery pack is used to charge the auxiliary battery pack.

In the charging process, when the voltage of the auxiliary battery pack is lower than 11V, the main power battery pack and the photovoltaic power generation module simultaneously charge the auxiliary battery pack; when the voltage is charged to more than 11V and below 13V, the current charging mode remains unchanged, and the main power battery pack and the photovoltaic power generation module are still used to charge the auxiliary battery pack together; when the voltage of the auxiliary battery pack is above 13V, the circuit via which the main power battery pack charges the auxiliary battery pack is disconnected, and only the photovoltaic power generation module is used to trickle charge for the auxiliary battery pack.

It can be understood that the above embodiments are merely illustrative embodiments for the purpose of illustrating the principles of the disclosure, but the disclosure is not limited thereto. It will be apparent to those skilled in the art that various changes and modifications can be made therein without departing from the spirit and essence of the disclosure, which are also considered to be within the scope of the disclosure.

Additional embodiments including any one of the embodiments described above may be provided by the disclosure, where one or more of its components, functionalities or structures is interchanged with, replaced by or augmented by one or more of the components, functionalities or structures of a different embodiment described above.

## Claims

1. A solar charging system (01), comprising:
a first battery pack (10,1),
a photovoltaic power generation module (11,4),
a second battery pack (12,6),
a DC/DC converter (13,2) and
a control component (14,3), wherein
the first battery pack (10,1) is electrically connected to the second battery pack (12,6) through the DC/DC converter (13,2),
the second battery pack (12,6) is electrically connected to the photovoltaic power generation module (11,4), and
the control component (14,3) is configured to detect a voltage of the second battery pack (12,6), and control connection/disconnection between the DC/DC converter (13,2) and the second battery pack (12,6) according to the detected voltage of the second battery pack (12,6).

2. The solar charging system according to claim 1, wherein the control component (14,3) includes: a switch (141), a detector (142) and a controller (143), wherein:
the switch (141) is configured to control connection/disconnection between the DC/DC converter (13,2) and the second battery pack (12,6);
the detector (142) is electrically connected to the second battery pack (12,6), and is configured to detect the voltage of the second battery pack (12,6);
the controller (143) is configured to control connection/disconnection between the switch (141) and the DC/DC converter (13,2) according to the voltage detected by the detector (142).

3. The solar charging system according to claim 2, wherein the switch (141) is connected in series between the DC/DC converter (13, 2) and the second battery pack (12, 6).

4. The solar charging system according to claim 2, wherein the switch (141) is a relay (63), and an output end of the DC/DC converter (13,2) is electrically connected to the second battery pack (12,6) through the relay (63).

5. The solar charging system according to claim 4, wherein the output end of the DC/DC converter (13,2) is electrically connected to a COM port of the relay, and an electrode corresponding to the second battery pack (12,6) is electrically connected to a normally open contact of the relay.

6. The solar charging system according to claim 4, wherein the relay is an over-voltage and under-voltage relay; a set over-voltage value of the over-voltage and under-voltage relay is lower than the voltage of the second battery pack (12,6) in a full state.

7. The solar charging system according to claim 1, wherein the charging system (01) further includes a low voltage load (15,61), and
an electrode of at least one of the first battery pack (10,1), the second battery pack (12,6) and the photovoltaic power generation module (11,4) is electrically connected to an electrode corresponding to the low voltage load (15,61).

8. The solar charging system according to claim 2, wherein: the charging system (01) further comprises: a timing device (16); the controller (143) controls the timing device (16); when the voltage of the second battery pack (12,6) is lower than a lower limit of a voltage threshold range, the controller (143) controls the timing device (16) to start timing, and after a predetermined time, the timing device (16) sends a signal that the timing is over to the controller (143).

9. The solar charging system according to claim 2, wherein the charging system (01) further includes a display device (17), and
the controller (143) is further configured to control the display device (17) to display the voltage of the second battery pack (12,6).

10. The solar charging system according to claim 2, wherein one of the batteries of the second battery pack (12,6) or series batteries composed of several batteries supply power to the detector (142) and the controller (143);
and/or,
one of the batteries of the second battery pack (12,6) or series batteries composed of several batteries supply power to the controller (143).

11. The solar charging system according to claim 1, wherein the solar charging system (01) further includes: a photovoltaic charging controller (5), and
the photovoltaic power generation module (11,4) is electrically connected to the second battery pack (12,6) through the photovoltaic charging controller (5).

12. The solar charging system according to claim 1, wherein: at least one electrode of the photovoltaic power generation module (11,4) is electrically connected to the second battery pack (12,6) through a diode;
when an output voltage of the photovoltaic power generation module (11,4) is higher than the voltage of the second battery pack (12,6), the diode is turned on.

13. A control method of a solar charging system according to any one of claims 1-12 comprising the following steps:
setting a predetermined voltage threshold range;
controlling the photovoltaic power generation module (11,4) to charge the second battery pack (12,6), or, controlling the first battery pack (10,1) and the photovoltaic power generation module (11,4) to charge the second battery pack (12,6), according to a comparative result between the voltage of the second battery pack (12,6) and the voltage threshold range.

14. The control method of a solar charging system according to claim 13, wherein:
the upper limit of the voltage threshold range is lower than the voltage of the second battery pack (12,6) when the second battery pack (12,6) is fully charged, and the lower limit of the voltage threshold range is higher than the voltage when the second battery pack (12,6) is exhausted; and
the step of controlling the photovoltaic power generation module (11,4) to charge the second battery pack (12,6), or controlling the first battery pack (10,1) and the photovoltaic power generation module (11,4) to charge the second battery pack (12,6) includes:
detecting the voltage of the second battery pack (12,6) during the voltage rise, and
comparing the detected voltage with the voltage threshold range;
controlling the photovoltaic power generation module (11,4) to charge the second battery pack (12,6) when the detected voltage is higher than the upper limit of the voltage threshold range;
controlling the photovoltaic power generation module (11,4) and the first battery pack (10,1) to charge the second battery pack (12,6) when the detected voltage is lower than or equal to the lower limit of the voltage threshold range.

15. The control method of a solar charging system according to claim 13, wherein:
the upper limit of the voltage threshold range is lower than the voltage of the second battery pack (12,6) when the second battery pack (12,6) is fully charged, and the lower limit of the voltage threshold range is higher than the voltage when the second battery pack (12,6) is exhausted; and
the step of controlling the photovoltaic power generation module (11,4) to charge the second battery pack (12,6), or controlling the first battery pack (10,1) and the photovoltaic power generation module (11,4) to charge the second battery pack (12,6) includes:
detecting the voltage of the second battery pack (12,6) during the voltage drop, and
comparing the detected voltage with the voltage threshold range;
controlling the photovoltaic power generation module (11,4) to charge the second battery pack (12,6) when the detected voltage is higher than the lower limit of the voltage threshold range;
controlling the photovoltaic power generation module (11,4) and the first battery pack (10,1) to charge the second battery pack (12,6) when the detected voltage is lower than or equal to the lower limit of the voltage threshold range.
